# EUROPEAN PATENT SPECIFICATION

(11) **EP 1 401 972 B1**
(45) Date of publication and mention of the grant of the patent: **11.06.2008**
(21) Application number: 02732642.0
(22) Date of filing: 19.04.2002
(51) Int. Cl.: C09D 17/00, C09B 67/00, C09D 167/08

(54) **PIGMENT PASTE**
PIGMENTPASTE
PATE PIGMENTAIRE

(30) Priority: 30.05.2001 EP 01202044
(43) Date of publication of application: 31.03.2004
(73) Proprietor: Akzo Nobel Coatings International B.V., 6824 BM Arnhem (NL)
(72) Inventor: JANS, Robertus, Jozef, Franciscus, NL-1161 VZ Zwanenburg (NL); DE JONG, Eugène, Michael, Arnoldus, NL-2351 CL Leiderdorp (NL)
(74) Representative: Schalkwijk, Pieter Cornelis
(86) International application number: PCT/EP2002/004351
(87) International publication number: WO 2002/096997

(56) References cited:
- EP-A- 0 012 964
- DE-B- 2 361 293
- US-A- 3 920 597
- US-A- 5 158 608
- US-A- 5 645 636

## Description

The present invention relates to a pigment paste for the tinting of paint, e.g., at a point of sale or during paint production by colour mixing systems.

In the paint industry, stock control and logistics are rationalised by using colour mixing systems. In such systems, a paint colour selected by a user is produced by selecting a base paint from a number of available base paints and tinting the selected base paint with the aid of one or more pigment pastes. Such systems are for example used in the field of decorative coatings. EP-A 0 311 209 discloses such a system.

Examples of pigment pastes for paint tinting systems are disclosed in EP-A 0 012 964 and EP-A 0 507 202. Next to pigments, pigment pastes typically include resins, solvents, and in general also additives. Pigments of the various colours vary considerably in nature. For each pigment, a compatible resin needs to be used. This resin needs, in turn, to be compatible with the binder system of the used base paints and with resins of the other pigment pastes as well, since for most colours, the addition of more than one pigment paste is required. The resin should also be able to disperse a sufficient amount of the pigment. Up to now it has not been possible to use tinting systems for high solids paints having a solids content of more than about 70% by weight, due to the high solvent content of the pigment pastes. The solvent content of current state of the art pigment pastes is so high that a paint made by mixing these pastes into a high solids base paint will have a substantially higher volatile organic content (VOC) than the original base paint.

The object of the invention is to provide a pigment paste comprising a resin which is compatible with all types of pigments. The resin should have sufficient dispersing and wetting power to disperse the pigments. Preferably, it should be possible to use the pastes for tinting high solids paints. The paste should not have a substantially negative effect on the viscosity, applicability, stability or VOC level of the paint to be mixed.

The object of the invention is achieved by a pigment paste for tinting a coating composition which pigment paste comprises at least one branched alkyd having a viscosity below 5 Pa.s, preferably below 3.5 Pa.s, at 23°C at a shear rate of 100 s⁻¹, and one or more pigments.

Surprisingly, it has been found that such alkyd resins are compatible with all types of pigments, organic as well as inorganic. The resins allow high pigment contents, while the solvent content can be kept very low. This makes it easier to mix paints complying with the latest VOC regulations, and more particularly to mix high solids paints.

Suitable examples of such alkyds are given in US 5,158,608, or similar alkyds with a lower degree of branching.

A possible parameter for controlling viscosity is the number average molecular weight Mn of the alkyd, which preferably is more than 1,500, more preferably between 2,000 and 2,400 g/mole. The molecular weight Mn in this case is measured using Gel Permeation Chromatography using polystyrene calibration.

Oil length has an influence on viscosity. Therefore, it is preferred to use an alkyd having an oil length of at least 76 and preferably below 84.

Controlling the degree of branching is another way to obtain an alkyd with the required viscosity while the molecular weight can still be kept high. The degree of branching is defined as the probability that a randomly selected functional group of a branch unit is connected to another branch unit either directly or via a chain of bifunctional units (P.J. Flory, Principles of Polymer Chemistry, Cornell University Press, Ithaca, N.Y., 1953). A suitable computer program for calculating the degree of branching is Recom 36X, of Akzo Nobel Resins, Bergen op Zoom, The Netherlands. Preferably, the degree of branching of the alkyd is at least 0.35 and more particularly below 0.42. The degree of branching can be increased by increasing the average functionality of the monomers.

The degree of branching can be lowered by using more di-functional monomers. Suitable diols for use as the initiator compound are for instance 1,3-propane diol, 1,2-ethane diol, 1,4-butane diol, 1,5-pentane diol, 1,6-hexane diol, and polytetrahydrofuran. Suitable branched diols are for instance dimethylol propane, neopentyl glycol, 2-propyl-2-methyl-1,3-propane diol, 2-butyl-2-ethyl-1,3-propane diol, 2,2-diethyl-1,3-propane diol, 1,2-propane diol, 1,3-butane diol, 2,2,4-trimethylpentane-1,3-diol, trimethylhexane-1,6-diol, 2-methyl-1,3-propane diol, diethylene glycol, triethylene glycol, polyethylene glycols, dipropylene glycol, tripropylene .glycol, and polypropylene glycols. Suitable cycloaliphatic diols are for example cyclohexane dimethanol and cyclic formals of pentaerythritol, and 1,3-dioxane-5,5-dimethanol. Suitable aromatic diols are for instance 1,4-xylylene glycol and 1-phenyl-1,2-ethane diol, and the reaction products of polyfunctional phenolic compounds and alkylene oxides or derivatives thereof. Examples of suitable phenolic compounds are Bisphenol A, hydroquinone, and resorcinol. An example of a suitable ester diol is neopentyl-hydroxypivalate.

Suitable triols for increasing the degree of branching if so required are for example trimethylol propane, trimethylol ethane, trimethylol butane, 3,5,5-trimethyl-2,2-dihydroxymethylhexane-1-ol, 1, glycerol, and 1,2,6-hexane triol. Alternatively, cycloaliphatic and aromatic triols and/or corresponding adducts with alkylene oxides or derivatives thereof can be used. Suitable tetrols are for example pentaerythritol, ditrimethylol propane, diglycerol and ditrimethylol ethane. It is also possible to use cycloaliphatic and aromatic tetrols as well as corresponding adducts with alkylene oxides or derivatives thereof. Suitable polyfunctional carboxylic acids and/or corresponding anhydrides are maleic anhydride, fumaric acid, orthophthalic anhydride, terephthalic acid, isophthalic acid, adipic acid, azelaic acid, sebacic acid, tetrahydrophthalic anhydride, hexahydrophthalic anhydride, and succinic acid.

Suitable chain extenders are for example monofunctional carboxylic acids having at least two hydroxyl groups. The chain extender can comprise dimethylolpropionic acid, α,α-bis-(hydroxymethyl)-butyric acid, α,α,α.-tris-(hydroxymethyl)-acetic acid, α,α-bis(hydroxymethyl)-valeric acid, α,α-bis-(hydroxy)propionic acid or .α-phenylcarboxylic acids having at least two phenolic hydroxyl groups.

A chain stopper should be used which comprises oxidatively drying groups, such as fatty acids. Suitable unsaturated fatty acid chain stoppers are for instance oleic acid, ricinoleic acid, linoleic acid, linolenic acid, erucic acid, soybean fatty acid, linseed fatty acid, dehydrated castor fatty acid, tall oil fatty acid, tung oil fatty acid, sunflower fatty acid, and safflower fatty acid.

Additionally other chain stoppers may be used, for example saturated monofunctional carboxylic acids or saturated fatty acids or anhydrides thereof; unsaturated monofunctional carboxylic acids, such as (meth)acrylic acids; aromatic monofunctional carboxylic acids such as benzoic acid and para-tert.butylbenzoic acid; epihalohydrins such as 1-chloro-2,3-epoxy propane and 1,4-dichloro-2,3-epoxy butane; glycidyl esters of a monofunctional carboxylic acid or of a fatty acid having up to 24 carbon atoms; epoxides of an unsaturated fatty acid with 3-24 carbon atoms such as epoxidised soybean fatty acid.

The chain stopper of the first-mentioned type may be linear or branched. Examples are acetic acid, propionic acid, butyric acid, valeric acid, isobutyric acid, trimethylacetic acid, caproic acid, caprylic acid, heptanoic acid, capric acid, pelargonic acid, lauric acid, myristic acid, palmitic acid, stearic acid, behenic acid, lignoceric acid, ceratic acid, montanoic acid, isostearic acid, isononanoic acid, and 2-ethylhexanoic acid.

Examples of suitable glycidyl esters of a monofunctional carboxylic acid or of a fatty acid are for instance 1,2-epoxy-3-allyloxypropane, 1-allyloxy-2,3-epoxypropane, 1,2-epoxy-3-phenoxypropane, and 1-glycidyloxy-2-ethyl hexane.

The reaction can be carried out without using a catalyst. If so required, a catalyst such as naphthalene sulphonic acid or para-toluene sulphonic acid can suitably be used. However, the initial step can be performed in the presence of an acid catalyst and subsequently the reaction product may be neutralised if so desired prior to a reaction with a chain stopper.

Dispersing properties of the resin are optimised if the acid value of the alkyd is between 6 and 12 mg KOH/g preferably between 6 and 9 KOH/g. If so required, surfactants can be used.

Pigments include inorganic as well as organic pigments. Examples of inorganic pigments include titanium dioxide, zinc oxide, carbon black, iron oxides, bismuth vanadates, raw and burnt sienna or umber, chromium oxide green, cadmium pigments, chromium pigments, etc. Examples of organic pigments include phthalocyanines, quinacridones, quinophthalones, anthraquinones, isoindolines, pyranthrones, indanthrones, derivatives of dioxazine, diketopyrrolopyrroles, azo-compounds, etc. Optionally, filler pigments may be added, such as clay, silica, talc, mica, woolastonite, wood flower, and the like.

High pigment contents can be realised in the pigment pastes according to the present invention without the use of high amounts of solvent. The solvent content is below 28% wt. preferably 2-25% wt. If organic pigments are used, the pigment content suitably ranges from 5 - 45% by weight, preferably from 25 - 40% by weight. If inorganic pigments are used, the pigment content should preferably be more than 10% by weight or, more preferably, even more than 60% by weight. If translucent pigments, e.g. translucent iron oxides, are used, the pigment content can be over 5% by weight, preferably over 20% by weight or even over 30 %.

Preferably, the volatile organic content VOC is below 300 g/l, more preferably below 250 g/l. If solvents are used, these should preferably have a low content of aromate groups, e.g. in the range of 0 - 1,100 mg/kg. Suitable solvents are for instance aliphatic solvents, such as Shellsol D60, from Shell, and Exxsol D60, from Exxon. Other suitable solvents are ketones or low molecular weight esters with a molecular weight Mw below 1,500 g/mole.

If so desired, the pigment pastes according to the invention may also comprise anti-foaming agents, matting agents, anti-settling agents, anti-skinning agents, such as methyl ethyl ketoxime, and/or other suitable additives.

The invention also involves a method for tinting a paint by selecting a base paint from a set of base paints and subsequently mixing the base paint with one or more of the above-described pigment pastes. Although in theory it is possible to mix all colours using a single clear base paint, generally also white base paints are used in tinting systems to obtain colours with sufficient hiding power. Different grades of white pigmented base paints may be used, if so desired. Generally, also a limited number of pre-tinted base paints are used to enhance the scope of the miscible colours with sufficient hiding power. Separate base paints for high-gloss, or satin gloss paints may also be used, if so desired.

Pigment pastes according to the present invention are particularly useful for mixing with solvent borne base paints preferably based on an alkyd resin, either hyperbranched or not. The pigment pastes are also suitable for use with high solids base paints having a VOC below 300 g/l.

The invention is further described and illustrated by the following examples. In these examples the compositions listed below are available as indicated.
- Borchigen^{®} ND: wetting agent, available from Borchers, Germany;
- Duploxid^{®} Red214 M: red pigment based on iron oxides, available from Rockwood Italia, Turin, Italy;
- Flammruss^{®} 101: carbon black, available from Degussa AG, Frankfurt, Germany;
- Hostaperm^{®} Violet RL NF: violet pigment, available from Clariant, Frankfurt, Germany;
- Kronos^{®} 2310: white pigment, titanium dioxide, available from Kronos International Inc, Leverkusen, Germany;
- Rhodoline^{®} DF 311 M: foam control agent, available from Rhone-Poulenc, Courbevoie, France;
- Setal^{®} 1961 WS 60: alkyd available from Akzo Nobel Resins, Bergen op Zoom, Netherlands;
- Setal^{®} 216 WX 65: alkyd available from Akzo Nobel Resins, Bergen op Zoom, Netherlands;
- Shellsol^{®} D60: aromate-free solvent, available from Shell, Netherlands;
- Sicopal^{®} Yellow L1100: yellow pigment, available from BASF, Ludwigshafen, Germany;

In the examples, all amounts of contents are given in parts by weight unless indicated otherwise.

The viscosity was measured at 23°C at a shear of 100 s⁻¹, in accordance with ISO 3219. The non-volatile content was calculated in accordance with ISO 3251. The acid number was measured in accordance with ISO 3682.

The drying time was measured by means of a BK Drying Recorder. To this end, the coating composition was applied on a glass plate with a draw bar. Curing took place at 10°C and 80% relative humidity in a climatised room. The results are classified as follows:
Phase 1 : the line traced by the pin closes up again ("open time").
Phase 2 : the pin traces a scratchy line ("dust free").
Phase 3 : the pin traces a straight line in the paint which does not close up again ("tack-free time").

### EXAMPLE 1

An alkyd was prepared according to the process of US 5,158,608 using a monomer selection which resulted in a calculated degree of branching of 0.39. The air-drying groups were formed by using tall oil fatty acid. No hypophosphorous acid was used. The acid value of the obtained alkyd was between 6 and 12, whereas the mean average molecular weight Mn was about 2,000 g/mole. The oil length was 79%. The measured viscosity was 2.0 - 3.2 Pa.s at 23 °C at a shear rate of 100 s⁻¹.

### EXAMPLE 2 - White pigment paste

A white pigment paste was made by mixing 25 parts by weight of the alkyd of Example 1 with 6.1 parts by weight of Shellsol^{®} D60, 68 parts by weight of Kronos^{®} 2310, 0.4 part by weight of methylethyl ketoxime, and 0.5 part by weight of Borchigen^{®} ND. The mixture was milled to fineness.

The volatile organic content was calculated to be 130 g/I.

### EXAMPLE 3 - Black pigment paste

A black pigment paste was made by mixing 74.5 parts by weight of the alkyd of Example 1, 2.0 parts by weight of Shellsol^{®} D60, 15 parts by weight of Flammruss^{®} 101, 0.5 part by weight of methylethyl ketoxime, 0.3 part by weight of Rhodoline DF 311 M. After milling, another 7.7 parts by weight of Shellsol® D60 were added. The mixture was milled to fineness.

The volatile organic content was calculated to be 120 g/l.

### EXAMPLE 4 - Red pigment paste

In this example, a red pigment paste was made by mixing 31.3 parts by weight of the alkyd of Example 1, 7.3 parts by weight of Shellsol^{®} D60, 60 parts by weight of Duploxid^{®} Red 214 M, 0.7 part by weight of methylethyl ketoxime, and 0.7 part by weight of Borchigen^{®} ND. The mixture was milled to fineness.

The volatile organic content was calculated to be 175 g/l.

### EXAMPLE 5 - Yellow pigment paste

A yellow pigment paste was made by mixing 23.6 parts by weight of the alkyd of Example 1, 8.05 parts by weight of Shellsol^{®} D60, 66 parts by weight of Sicopal^{®} Yellow L1100, 0.8 part by weight of methylethyl ketoxime, 0.3 part by weight of Rhodoline^{®} DF 311 M, and 1.25 parts by weight of Borchigen^{®} ND. The mixture was milled to fineness.

The volatile organic content was calculated to be 230 g/l.

### EXAMPLE 6 - Violet pigment paste

64 parts by weight of the alkyd of Example 1 were mixed with 20 parts by weight of Shellsol^{®} D60, 15 parts by weight of Hostaperm^{®} Violet RL NF, 0.7 part by weight of methylethyl ketoxime, and 0.3 part by weight of Rhodoline^{®} DF 311 M. The mixture was milled to fineness.

The volatile organic content was calculated to be 219 g/l.

### EXAMPLE 7

A colourless base paint based on two non-hyperbranched alkyds (Setal^{®} 1961 WS 60 and Setal^{®} 216 WX 65) was tinted with the pigment paste of Example 6. Before tinting, the viscosity of the base paint was 0.70 Pa.s. The solids content of the base paint was about 61% by weight. After being tinted with the pigment paste in a mixing ratio of 12 to 100, the mixture had a viscosity of 0.71 Pa.s, whereas the volatile organic content was approximately 375 g/I.

The resulting violet paint was shown to be stable for at least three months. Drying times typically were in the range of 2 hours (open time), 7.5 hours (dust free) and 12 hours (tack free). The colour acceptance and the gloss were very good.

### EXAMPLE 8

A white base paint based on a soya alkyd, Setal^{®} 270 WS 70, was tinted with the pigment paste of Example 6. Before tinting, the viscosity of the paint was 0.55 Pa.s. The solids content of the base paint was 70% by weight. After being tinted with the pigment paste in a ratio of 3 to 100, the mixture had a viscosity of 0.57 Pa.s, whereas the volatile organic content was 380 g/I. The resulting violet paint was shown to be stable for at least three months. Drying times were in the range of 2.5 hours (open time), 5 hours (dust free), and 8 hours (tack free). The colour acceptance and the gloss were very good.

## Claims

1. Pigment paste for tinting a coating composition, the pigment paste comprising at least one branched alkyd having a viscosity below 5 Pa.s at 23°C at a shear rate of 100 s⁻¹, and one or more pigments.

2. Pigment paste according to claim 1 **characterized in that** the pigment paste comprises at least one branched alkyd having a viscosity below below 3.5 Pa.s at 23°C at a shear rate of 100 s⁻¹

3. A pigment paste according to claim 1 or 2, **characterised in that** the number average molecular weight Mn of the alkyd is more than 1,500.

4. A pigment paste according to claim 3, **characterised in that** the number average molecular weight Mn of the alkyd is between 2,000 and 2,400 g/mole.

5. A pigment paste according to either of the preceding claims, **characterised in that** the degree of branching of the alkyd is at least 0.35.

6. A pigment paste according to claim 5, **characterised in that** the degree of branching of the alkyd is below 0.42

7. A pigment paste according to any one of the preceding claims, **characterised in that** the oil length is at least 76.

8. A pigment paste according to any one of the preceding claims, **characterised in that** the oil length is below 84.

9. A pigment paste according to any one of the preceding claims, **characterised in that** the acid value is between 6 and 9 mg KOH/g.

10. A pigment paste according to any one of the preceding claims, **characterised in that** it comprises one or more aromate-free solvents.

11. A pigment paste according to claim 10 **characterised in that** the solvent is selected from the group comprising aliphatic hydrocarbonic solvents, ketones and/or esters having a molecular weight Mn below 1,500.

12. A pigment paste according to claim 10 or 11, **characterised in that** the solvent content is below 28% by weight

13. A pigment paste according to claim 12, **characterised in that** the solvent content is 2 - 25% by weight.

14. A pigment paste according to any one of the preceding claims, **characterised in that** the volatile organic content VOC is below 300 g/l.

15. A pigment paste according to any one of the preceding claims, **characterised in that** the volatile organic content VOC is below 250 g/l.

16. Method for tinting a paint, **characterised in that** a base paint is selected from a set of base paints and subsequently mixed with one or more pigment pastes according to any one of claims 1-15.

17. A method according to claim 16, **characterised in that** the base paint is a solvent borne composition comprising an alkyd.

## Patentansprüche

1. Pigmentpaste zum Tönen einer Beschichtungszusammensetzung, wobei die Pigmentpaste wenigstens ein verzweigtes Alkyd mit einer Viskosität von weniger als 5 Pa·s bei 23 °C bei einer Schergeschwindigkeit von 100 s⁻¹ und ein oder mehrere Pigmente umfasst.

2. Pigmentpaste nach Anspruch 1, **dadurch gekennzeichnet, dass** die Pigmentpaste wenigstens ein verzweigtes Alkyd mit einer Viskosität von weniger als 3,5 Pa·s bei 23 °C bei einer Schergeschwindigkeit von 100 s⁻¹ umfasst.

3. Pigmentpaste nach Anspruch 1 oder 2, **dadurch gekennzeichnet, dass** das Zahlenmittel der Molmasse, Mn, des Alkyds mehr als 1500 beträgt.

4. Pigmentpaste nach Anspruch 3, **dadurch gekennzeichnet, dass** das Zahlenmittel der Molmasse, Mn, des Alkyds zwischen 2000 und 2400 g/mol beträgt.

5. Pigmentpaste nach einem der vorhergehenden Ansprüche, **dadurch gekennzeichnet, dass** der Verzweigungsgrad des Alkyds wenigstens 0,35 beträgt.

6. Pigmentpaste nach Anspruch 5, **dadurch gekennzeichnet, dass** der Verzweigungsgrad des Alkyls weniger als 0,42 beträgt.

7. Pigmentpaste nach einem der vorhergehenden Ansprüche, **dadurch gekennzeichnet, dass** der Ölgehalt wenigstens 76 beträgt.

8. Pigmentpaste nach einem der vorhergehenden Ansprüche, **dadurch gekennzeichnet, dass** der Ölgehalt weniger als 84 beträgt.

9. Pigmentpaste nach einem der vorhergehenden Ansprüche, **dadurch gekennzeichnet, dass** die Säurezahl zwischen 6 und 9 mg KOH/g beträgt.

10. Pigmentpaste nach einem der vorhergehenden Ansprüche, **dadurch gekennzeichnet, dass** sie ein oder mehrere aromatenfreie Lösungsmittel umfasst.

11. Pigmentpaste nach Anspruch 10, **dadurch gekennzeichnet, dass** das Lösungsmittel aus der aliphatische Kohlenwasserstoff-Lösungsmittel, Ketone und/oder Ester mit einer Molmasse Mn von weniger als 1500 umfassenden Gruppe ausgewählt ist.

12. Pigmentpaste nach Anspruch 10 oder 11, **dadurch gekennzeichnet, dass** der Lösungsmittelgehalt weniger als 28 Gew.-% beträgt.

13. Pigmentpaste nach Anspruch 12, **dadurch gekennzeichnet, dass** der Lösungsmittelgehalt 2-25 Gew.-% beträgt.

14. Pigmentpaste nach einem der vorhergehenden Ansprüche, **dadurch gekennzeichnet, dass** der Gehalt an flüchtigen organischen Stoffen, VOC, weniger als 300 g/l beträgt.

15. Pigmentpaste nach einem der vorhergehenden Ansprüche, **dadurch gekennzeichnet, dass** der Gehalt an flüchtigen organischen Stoffen, VOC, weniger als 250 g/I beträgt.

16. Verfahren zum Tönen eines Anstrichmittels, **dadurch gekennzeichnet, dass** eine Grundfarbe aus einem Satz von Grundfarben ausgewählt und anschließend mit einer oder mehreren Pigmentpasten nach einem der Ansprüche 1-15 vermischt wird.

17. Verfahren nach Anspruch 16, **dadurch gekennzeichnet, dass** die Grundfarbe eine Zusammensetzung auf Lösungsmittelbasis ist, die ein Alkyd umfasst.

## Revendications

1. Pâte pigmentaire pour colorer une composition de revêtement, la pâte pigmentaire comprenant au moins un alkyde ramifié ayant une viscosité inférieure à 5 Pa·s à 23 °C à une vitesse de cisaillement de 100 s⁻¹, et un ou plusieurs pigments.

2. Pâte pigmentaire selon la revendication 1, **caractérisée en ce que** la pâte pigmentaire comprend au moins un alkyde ramifié ayant une viscosité inférieure à 3,5 Pa.s à 23 °C à une vitesse de cisaillement de 100 s⁻¹.

3. Pâte pigmentaire selon la revendication 1 ou 2, **caractérisée en ce que** le poids moléculaire moyen en nombre Mn de l'alkyde est supérieur à 1500.

4. Pâte pigmentaire selon la revendication 3, **caractérisée en ce que** le poids moléculaire moyen en nombre Mn de l' alkyde est compris dans la plage allant de 2000 à 2400 g/mol.

5. Pâte pigmentaire selon l'une quelconque des revendications précédentes, **caractérisée en ce que** le degré de ramification de l'alkyde est d'au moins 0,35.

6. Pâte pigmentaire selon la revendication 5, **caractérisée en ce que** le degré de ramification de l'alkyde est inférieur à 0,42.

7. Pâte pigmentaire selon l'une quelconque des revendications précédentes, **caractérisée en ce que** la teneur en huile est d'au moins 76.

8. Pâte pigmentaire selon l'une quelconque des revendications précédentes, **caractérisée en ce que** la teneur en huile est inférieure à 84.

9. Pâte pigmentaire selon l'une quelconque des revendications précédentes, **caractérisée en ce que** l'indice d'acidité est compris dans la plage allant de 6 à 9 mg de KOH/g.

10. Pâte pigmentaire selon l'une quelconque des revendications précédentes, **caractérisée en ce qu'**elle comprend un ou plusieurs solvants sans groupes aromatiques.

11. Pâte pigmentaire selon la revendication 10, **caractérisée en ce que** le solvant est choisi dans le groupe comprenant les solvants hydrocarbonés aliphatiques, les cétones et/ou les esters ayant un poids moléculaire Mn inférieur à 1500.

12. Pâte pigmentaire selon la revendication 10 ou 11, **caractérisée en ce que** la teneur en solvant est inférieure à 28 % en poids.

13. Pâte pigmentaire selon la revendication 12, **caractérisée en ce que** la teneur en solvant est comprise dans la plage allant de 2 à 25 % en poids.

14. Pâte pigmentaire selon l'une quelconque des revendications précédentes, **caractérisée en ce** la teneur en composés organiques volatils COV est inférieure à 300 g/l.

15. Pâte pigmentaire selon l'une quelconque des revendications précédentes, **caractérisée en ce** la teneur en composés organiques volatils COV est inférieure à 250 g/l.

16. Procédé de coloration d'une peinture, **caractérisé en ce qu'**une peinture de base est choisie parmi une série de peintures de base et est ensuite mélangée avec une ou plusieurs pâtes pigmentaires selon l'une quelconque des revendications 1 à 15.

17. Procédé selon la revendication 16, **caractérisé en ce que** la peinture de base est une composition à base de solvant comprenant un alkyde.
